# EUROPEAN PATENT APPLICATION

(11) **EP 1 750 224 A1**
(43) Date of publication of application: **07.02.2007**
(21) Application number: 06253558.8
(22) Date of filing: 06.07.2006
(51) Int. Cl.: G06Q 10/00

(54) **Method and apparatus for making web service policy agreement**

(30) Priority: 12.07.2005 KR 20050062882
(71) Applicant: Samsung Electronics Co., Ltd., Suwon-si, Gyeonggi-Do (KR)
(72) Inventor: Kim, Che-uk, 103-1301 Kumho Town Apt., Seoul (KR)
(74) Representative: Brandon, Paul Laurence

(57) **Abstract**

A method and apparatus for making a web service policy agreement between a web service user and a web service provider, the method including a function which requests a server to make an agreement document of a web service policy of a web service of a plurality of web services registered to the server is called, and the agreement document is obtained as a return value of the call for the function, thereby reducing the computational load on the web service user.

## Description

The present invention relates to web services.

Web services indicate a series of services provided on the Internet. Universal Description, Discovery, and Integration (UDDI) have been introduced to easily search for web services that worldwide business entities provide on the Internet. UDDI is a group of XML (Extensible Markup Language)-based registries used by the world's business entities to register them on a world business list on the Internet.

A web service user and a web service provider have their own web service policies. In the case of the former, the web service policy means technical requirements regarding a web service that the web service user desires to use, and in the case of the latter, the web service policy means various technical matters that the web service provider can provide through a web service.

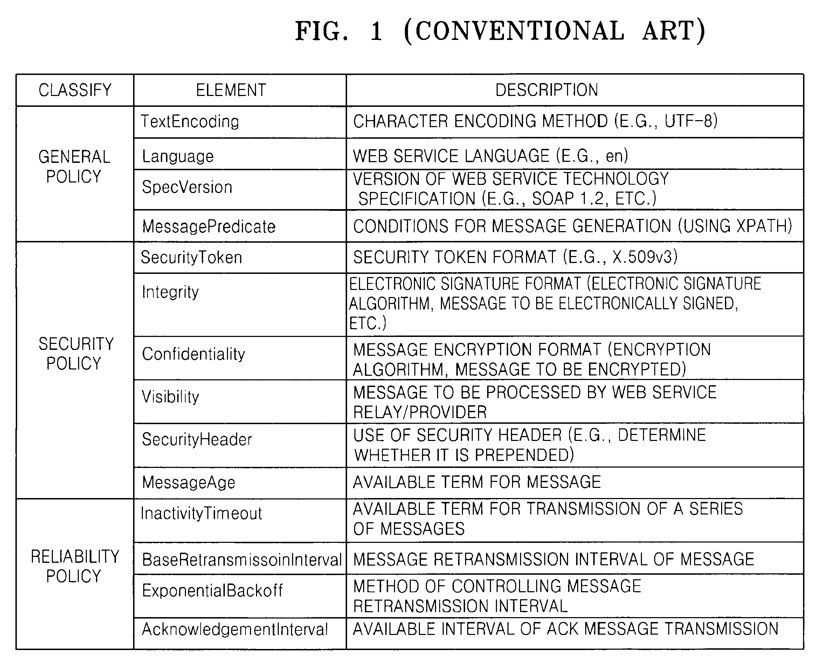

FIG. 1 is a table illustrating general conventional web service policies. Referring to FIG. 1, the conventional web service policies include a general policy regarding a character encoding method, etc.; a security policy regarding the formats of security tokens, etc.; and a reliability policy regarding an available period in which a series of messages can be transmitted, for example.

Since a web service user and a web service provider may have different web service policies regarding a web service, they have to make an agreement between the different web service policies.

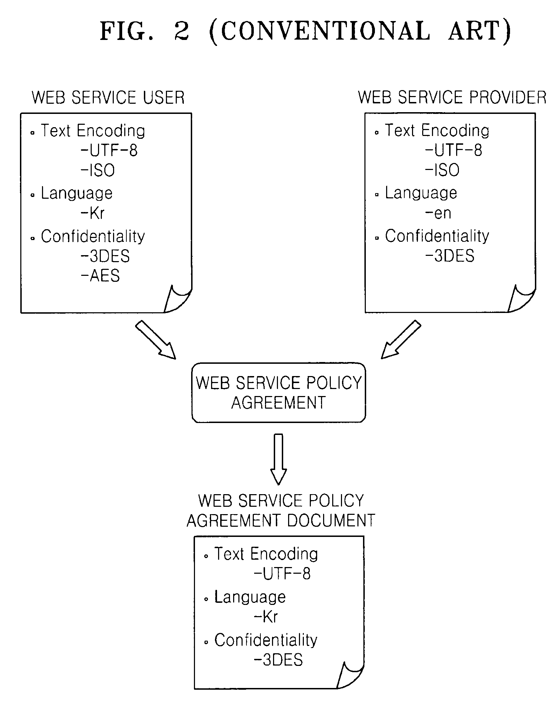

FIG. 2 is a schematic view illustrating a conventional method of making a web service policy agreement between a web service user and a web service provider. Referring to FIG. 2, a web service agreement document that specifies a character encoding method is Uniform Transformation Format (UTF)-8, a web service language is Korean (KR), and a secrecy level is 3DES (Data Encryption Standard) is created based on the web service policies of the web service user and the web service provider. In general, when the web service policies of the web service user and the web service provider include more than one common element, one of the common elements is selected according to priority.

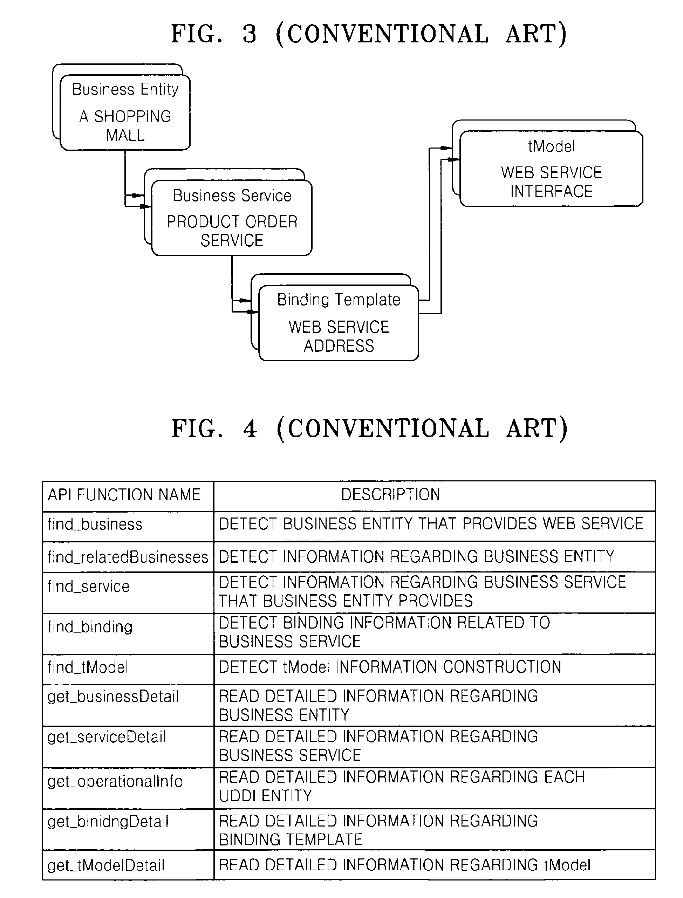

FIG. 3 is a view illustrating a conventional data construction of a UDDI. Referring to FIG. 3, the UDDI has a data construction in which a business entity, a business service, a binding template, and a technical model (tModel) are sequentially arranged. The UDDI is used to systematically store business information and technical information regarding a web service.

The business entity denotes information regarding a business of a web service provider, and includes the name of a business entity, the field of industry, a uniform resource locator (URL) of the business entity, and the like. The business service denotes business information regarding the web service, and includes the name, category, and description of the web service, etc. The binding template denotes technical information regarding the web service and specifies a web service URL, etc. The tModel denotes technical specifications of the web service, and includes a web service interface, a web service policy, etc.

FIG. 4 is a table illustrating conventional application program interface (API) functions that the UDDI provides. The UDDI provides various API functions, shown in FIG. 4, which are used to search for a data construction such as that shown in FIG. 3.

FIG. 5 is a view illustrating the construction of a conventional web service system. Referring to FIG. 5, the conventional web service system includes a web service user 1, a UDDI server 2, and a web service provider 3. An agreement between web service policies may be obtained using the API functions shown in FIG. 4, as follows.

First, the web service provider 3 registers information regarding a web service to be provided to the UDDI server 2. The information includes the address, e.g., a URL, of a link to the web service policy of the web service provider 3, that is, a place in which files of the web service policy are stored. Next, the web service user 1 searches the UDDI server 2 for the link to the web service policy, and detects the files of the web service policy of the web service provider 3 using the searched link. Next, the web service user 1 compares its web service policy files with the web service policy files of the web service provider 3, and makes a web service policy agreement document. Then, the web service user 1 calls a web service using the web service policy agreement document.

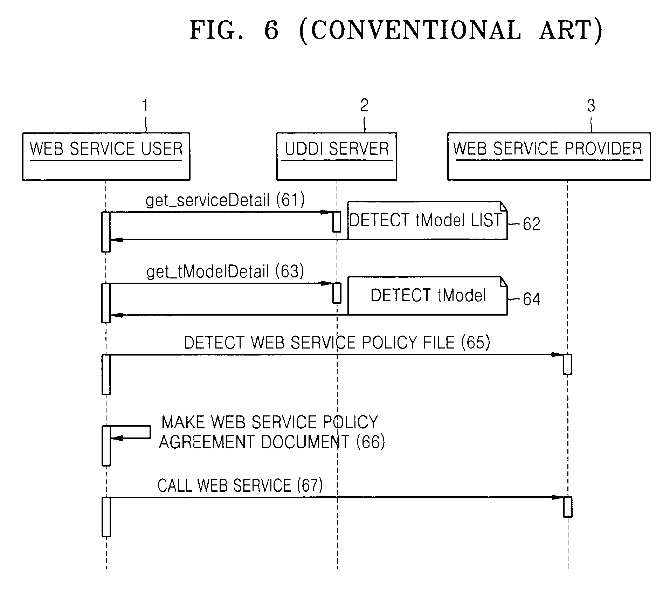

Conventional methods of making an agreement on web service policies for various cases will now be described in greater detail with reference to FIGS. 6 through 9.

FIG. 6 is a flowchart illustrating an example of a conventional method of making a web service policy agreement. The method of FIG. 6 is performed with respect to a web service, and includes the following operations.

Referring to FIG. 6, a web service user 1 calls a get_serviceDetail API function related to a web service from a UDDI server 2, and the UDDI server 2 receives the call for the get_serviceDetail API function from the web service user 1 (61).

Next, the UDDI server 2 searches for a list of tModels of the web service in response to the call for the get_serviceDetail API function, made in operation 61, and provides the tModel list to the web service user 1 (62).

Next, the web service user 1 calls a get_tModelDetail API function, using a tModel key corresponding to a web service policy, the tModel key being included in the tModel list from the UDDI server 2, and the UDDI server 2 receives the call for the get_tModelDetail API function from the web service user 1 (63).

Next, the UDDI server 2 searches for tModels corresponding to the tModel key and provides them to the web service user 1, in response to the call for the get_tModelDetail API function, made in operation 63 (64).

Next, the web service user 1 searches for a file of a web service policy of a web service provider 3, using a link to the web service policy of the tModels provided from the UDDI server 2 (65).

Next, the web service user 1 compares its web service policy file with the web service policy file of the web service provider 3, and makes a web service policy agreement document based on the comparison result (66).

Next, the web service user 1 calls a web service from the web service provider 3, using the web service policy agreement document made in operation 66 (67).

According to the method illustrated in FIG. 6, the web service provider 3 must call a remote function three times and a local function twice.

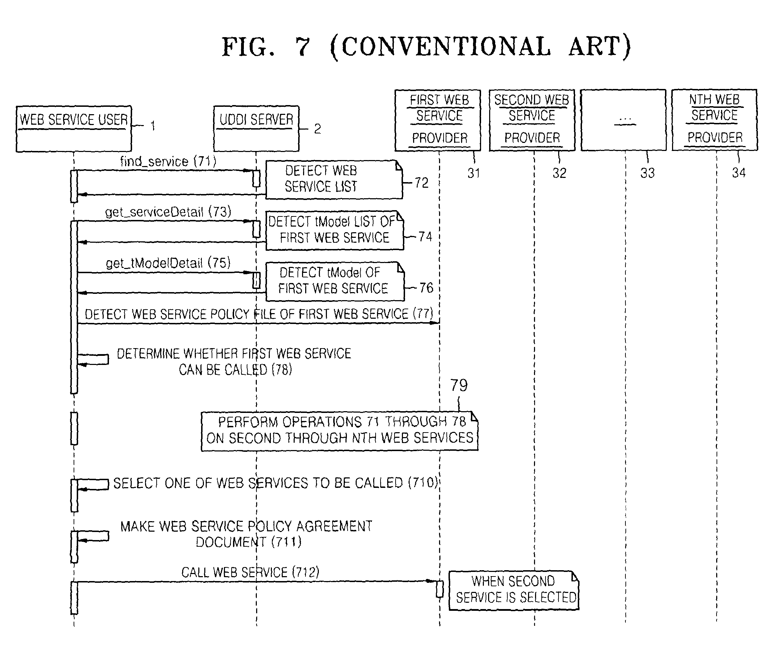

FIG. 7 is a flowchart illustrating a second example of a conventional method of making a web service policy agreement. The method of FIG. 7 is performed with respect to a plurality of web services, and includes the following operations.

First, a web service user 1 calls a find_service API function related to a service category from a UDDI server 2, and the UDDI server 2 receives the call for the find_service API function from the web service user 1 (71).

Next, the UDDI server 2 searches for a list of web services belonging to the service category and provides the web service list to the web service user 1, in response to the call for the find_service API function, made in operation 71 (72).

Next, the UDDI server 2 searches for a file of a web service policy of the web service user 1, and searches the web service list detected in operation 72 for a file of a web service policy of a first web service provider 31 that provides a first web service (72).

Also, the web service user 1 calls a get_serviceDetail API function related to the first web service from the web service list provided from the UDDI server 2, and the UDDI server 2 receives the call for the get_serviceDetail API function from the web service user 1 (73).

Next, the UDDI server 2 searches for a list of tModels of the first web service and provides the tModel list to the web service user 1, in response to the call for the get_serviceDetail API function made in operation 73 (74).

Next, the web service user 1 calls a get_tModelDetail API function, using a tModel key corresponding to a web service policy from the tModel list provided from the UDDI server 2, and the UDDI server 2 receives the call for the get_tModelDetail API function from the web service user (75).

Next, the UDDI server 2 searches for tModel corresponding to the tModel key and provides them to the web service user 1, in response to the call for the get_tModelDetail API function made in operation 74 (76).

Next, the web service user 1 detects a file of a web service policy of the first web service provider 31, using a link to a web service policy of the tModel from the UDDI server 2 (77).

Next, the web service user 1 compares its web service policy file with the web service policy file of the first web service provider 31, and determines whether a web service from the first web service provider 31 can be called by the web service user 1, based on the comparison result (78).

Next, the web service user 1 performs operations 73 through 78 on each of the other web services, i.e., second through n^{th} web services, listed in the web service list (79).

Next, the web service user 1 selects one of web services that can be called by the web service user 1, based on the results of operations 78 and 79 (710). Hereinafter, it is assumed that the web service user 1 selects the first web service in operation 710.

Next, the web service user 1 compares its web service policy file with a file of a web service policy of a first web service 32 that provides a first web service, and makes a web service policy agreement document based on the comparison result (711).

Next, the web service user 1 calls a web service from the second web service provider 32 using the web service policy agreement document made in operation 711 (712).

According to the method of FIG. 7, each of the first through n^{th} web service providers 31 through 34 must call a remote function (3xn+1) times and a local function (n+2) times.

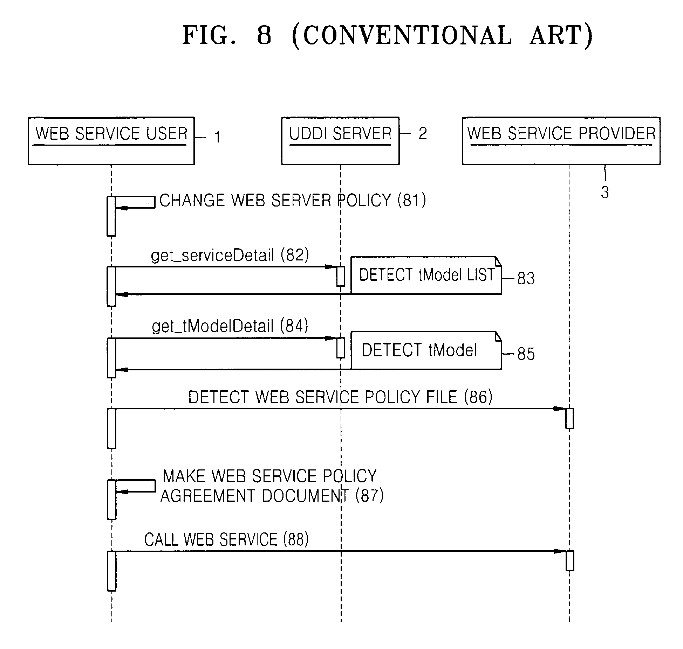

FIG. 8 is a flowchart illustrating a third example of a conventional method of making a web service policy agreement. The method of FIG. 8 is performed when a web service policy of a web service user 1 is changed, and includes the following operations.

Referring to FIG. 8, the web service user 1 changes its web service policy (81).

Next, the web service user 1 remotely calls a get_serviceDetail API function from a UDDI server 2 to make a new web service policy agreement reflecting the web service policy changed in operation 81, and the UDDI server 2 receives the call for the get_serviceDetail API function from the web service user 1 (82).

Next, the UDDI server 2 detects a list of tModels of the web service and provides it to the web service user 1, in response to the call for the get_serviceDetail API function made in operation 82 (83).

Next, the web service user I calls a get_tModelDetail API function, using a tModel key corresponding to the web service policy among the tModel list from the UDDI server 2, and the UDDI server 2 receives the call for the get_tModelDetail API function from the web service user 1 (84).

Next, the UDDI server 2 detects tModel corresponding to the tModel key and provides them to the web service user 1, in response to the call for the get_tModelDetail API function made in operation 84 (85).

Next, the web service user 1 searches for a file of a web service policy of the web service provider 3, using a link to a web service policy of the tModels from the UDDI server 2 (86).

Next, the web service user 1 compares its web service policy file with the web service policy file of the web service provider 3, and makes a web service policy agreement document based on the comparison result (87).

Next, the web service user 1 calls the web service from the web service provider 3 using the web service policy agreement document made in operation 87 (88).

According to the method of FIG. 8, the web service provider 3 has to call a remote function three times and a local function twice.

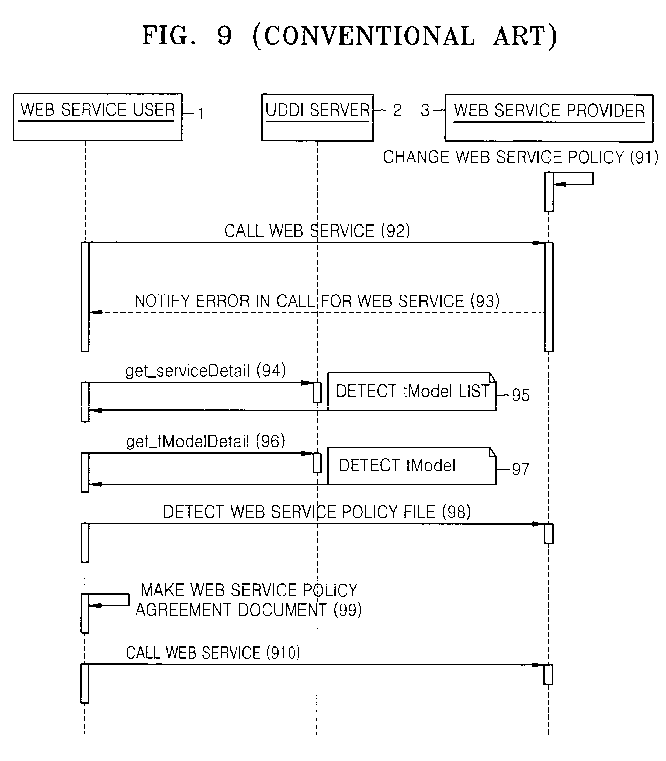

FIG. 9 is a flowchart illustrating a fourth example of a conventional method of making a web service policy agreement. The method of FIG. 9 is performed when a web service policy of a web service provider 3 is changed, and includes the following operations.

Referring to FIG. 9, the web service provider 3 changes its web service policy (91).

Next, the web service user I calls a web service from the web service provider 3, using the existing web service policy agreement document (92).

Next, the web service provider 3 receives the call for the web service, and informs the web service user 1 of an error in the call for the web service, caused by the difference between web service policies of the web service user 1 and the web service provider 3 (93).

Next, when receiving the information regarding the error in the call for the web service from the web service provider 3 in operation 93, the web service user I remotely calls a get_serviceDetail API function from a UDDI server 2 in order to make a new web service policy agreement document, and the UDDI server 2 receives the call for the get_serviceDetail API function from the web service user 1 (94).

Next, the UDDI server 2 searches for a list of tModels of the web service and provides it to the web service user 1, in response to the call for the get_serviceDetail API function made in operation 94 (95).

Next, the web service user 1 calls a get_tModelDetail API function using a tModel key corresponding to a web service policy from the tModel list from the UDDI server 2, and the UDDI server 2 receives the call for the get_tModelDetail API function from the web service user 1 (96).

Next, the UDDI server 2 searches for tModel corresponding to the tModel key and provides them to the web service user 1, in response to the call for the get_tModelDetail API function made in operation 96 (97).

Next, the web service user 1 detects a file of the web service policy of the web service provider 3, using a link to the web service policy from the tModels from the UDDI server 2 (98).

Next, the web service user 1 compares its web service policy file with the web service policy file of the web service provider 3, and makes a web service policy agreement document based on the comparison result (99).

Next, the web service user 1 calls a web service to the web service provider 3 using the web service policy agreement document made in operation 99 (910).

According to the method of FIG. 9, the web service provider 3 must call a remote function three times and a local function twice.

As described above, the conventional methods of making a web service policy agreement have the following problems. First, when a web service is provided or the existing web service policy is changed, a remote function must be called three times, and a local function must be called twice, thereby increasing the loading on a web service user.

Second, the web service user must download a file of a web service policy of a web service provider whenever it requires a web service policy agreement document, thereby increasing network traffics in the web service user and wasting disc resources. In particular, the first and second problems become worse when the web service user is a low-performance embedded system, such as a household electronic appliance or a mobile apparatus.

Third, since the conventional methods of making a web service policy agreement are individually performed in the web service user, they may be differently embodied according to the type of the web service user, thereby making it difficult to determine a standard for making a web service policy agreement and increasing development costs of the methods.

Preferred embodiments of the present invention aim to provide an apparatus and method for making a web service policy agreement, using an application program interface (API) function that reduces the processing load on a web service user.

Preferred embodiments of the present invention also aim to provide a computer readable recording medium storing a program for executing the above method in a computer.

According to an aspect of the present invention, there is provided a method of obtaining an agreement document of web service policies between a web service user and a web service provider, the method including calling a first function requesting a server to make an agreement document of a web service policy regarding a web service of a plurality of web services registered to the server, and obtaining the agreement document as a return value of the call for the first function.

According to an aspect of the present invention, there is provided an apparatus for obtaining a web service policy agreement document between a web service user and a web service provider, the apparatus including a first function generator generating a function which requests a server to make an agreement document of a web service policy regarding a web service of a plurality of web services registered to the server; and a receiver obtaining the agreement document as a return value of the call for the function generated by the first function generator.

According to an aspect of the present invention, there is provided a computer readable medium having embodied thereon a program for executing the method of obtaining a web service policy agreement document between a web service user and a web service provider in a computer.

According to an aspect of the present invention, there is provided a method of providing a web service policy agreement document between a web service user and a web service provider, the method including a server receiving a call for a first function requesting which an agreement document of a web service policy regarding one of a plurality of web services registered to the server be made; performing a series of operations corresponding to the first function in response to the call for the first function; and providing the web service user with an agreement document, which is obtained as the result of the operations performed in (b), as a return value of the call for the first function.

According to an aspect of the present invention, there is provided an apparatus for providing a web service policy agreement document between a web service user and a web service provider, the apparatus including a first function processor performing a series of operations corresponding to a first function in response to a call for the first function, the first function requesting a server to make an agreement document of a web service policy regarding a web service of a plurality of web services registered to the server; and a transmitter providing an agreement document, which is obtained as the result of the operations performed by the first function processor, as a return value of the call for the first function.

According to an aspect of the present invention, there is provided a computer readable medium having embodied thereon a program for executing the method of providing a web service policy agreement document between a web service user and a web service provider in a computer.

Further features of the present invention are set out in the appended claims.

The present invention will become more apparent by describing in detail exemplary embodiments thereof with reference to the attached drawings in which:

FIG. 1 is a table illustrating conventional web service policies;

FIG. 2 is a schematic view illustrating a conventional method of making a web service policy agreement;

FIG. 3 is a view illustrating a conventional data construction of a universal description, discovery, and integration (UDDI);

FIG. 4 is a table illustrating a conventional application program interface (API) functions that a UDDI provides;

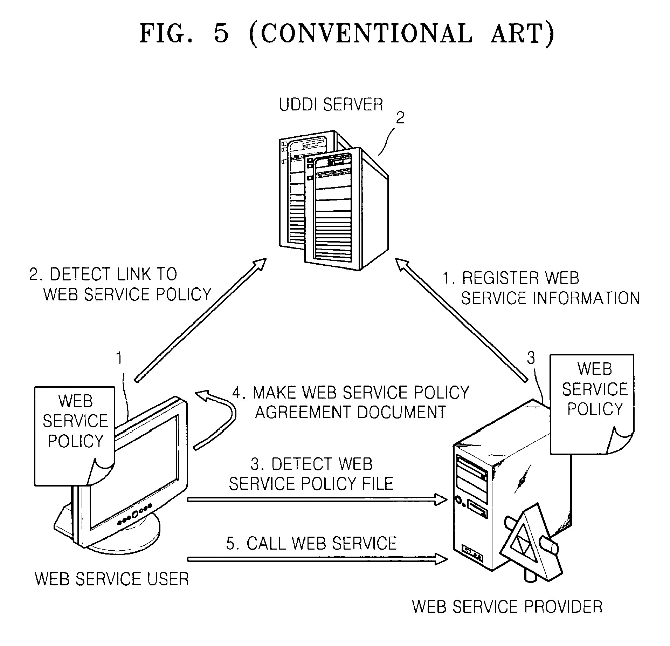

FIG. 5 is a view illustrating the construction of a conventional web service system;

FIG. 6 is a flowchart illustrating a first example of a conventional method of making a web service policy agreement;

FIG. 7 is a flowchart illustrating a second example of a conventional method of making a web service policy agreement;

FIG. 8 is a flowchart illustrating a third example of a conventional method of making a web service policy agreement;

FIG. 9 is a flowchart illustrating a fourth example of a conventional method of making a web service policy agreement;

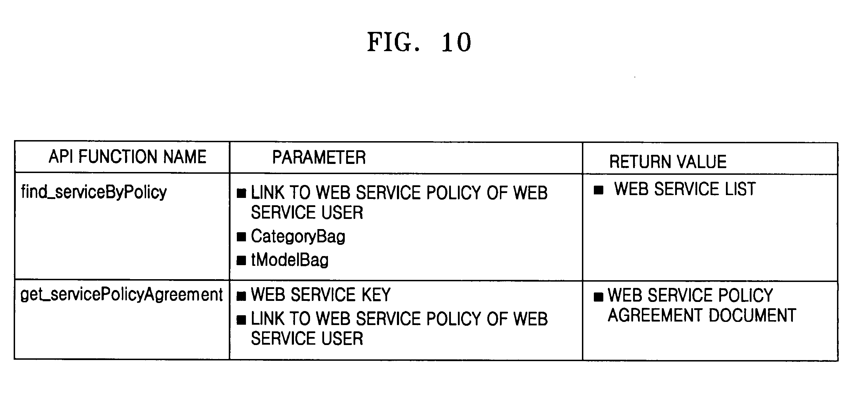

FIG. 10 is a table illustrating API functions according to an exemplary embodiment of the present invention;

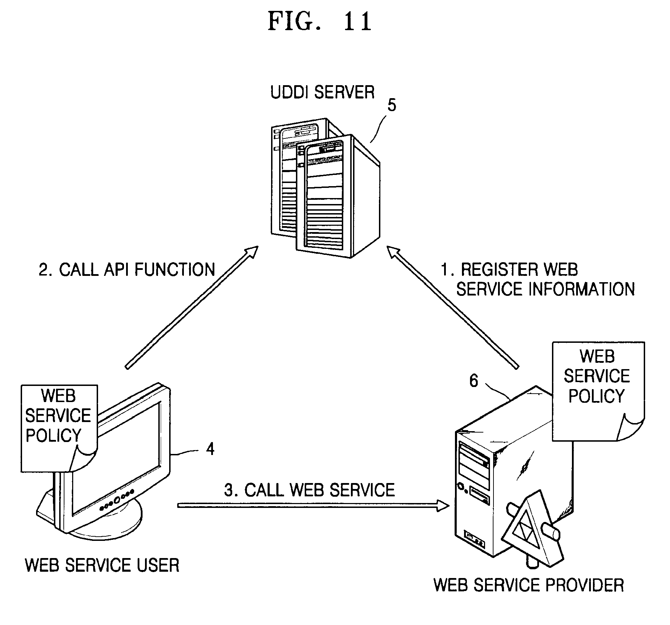

FIG. 11 is a view illustrating the construction of a web service system according to an exemplary embodiment of the present invention;

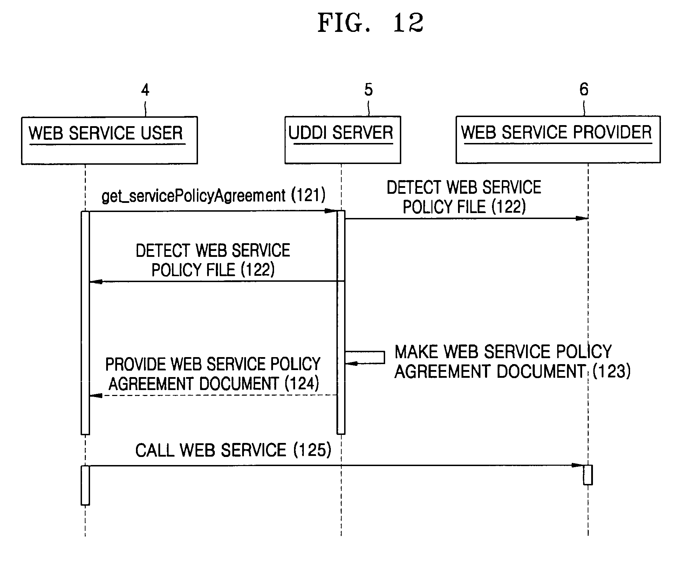

FIG. 12 is a flowchart illustrating a method of making a web service policy agreement according to an exemplary embodiment of the present invention;

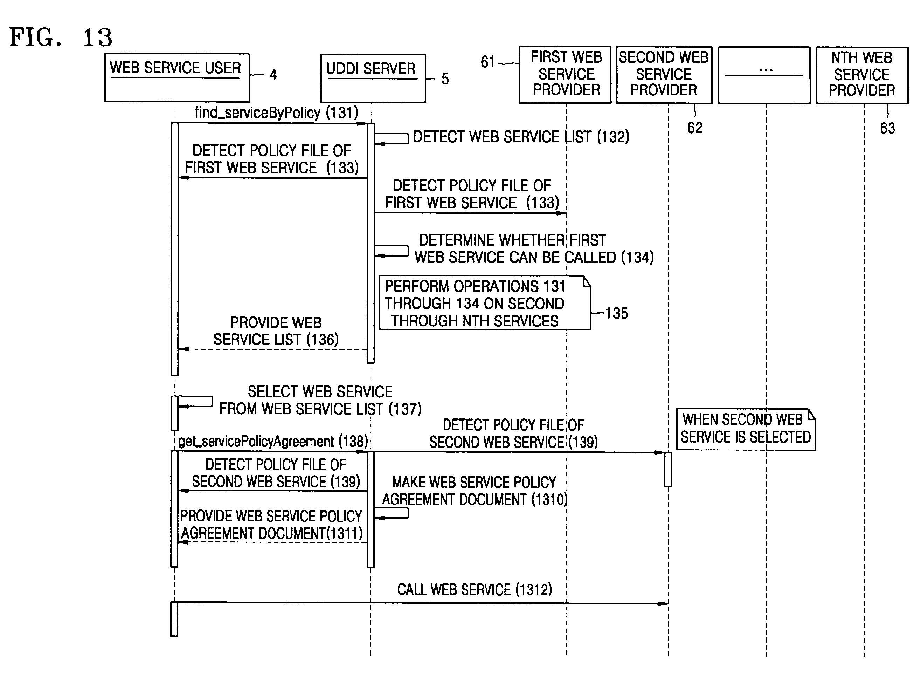

FIG. 13 is a flowchart illustrating a method of making a web service policy agreement according to another exemplary embodiment of the present invention;

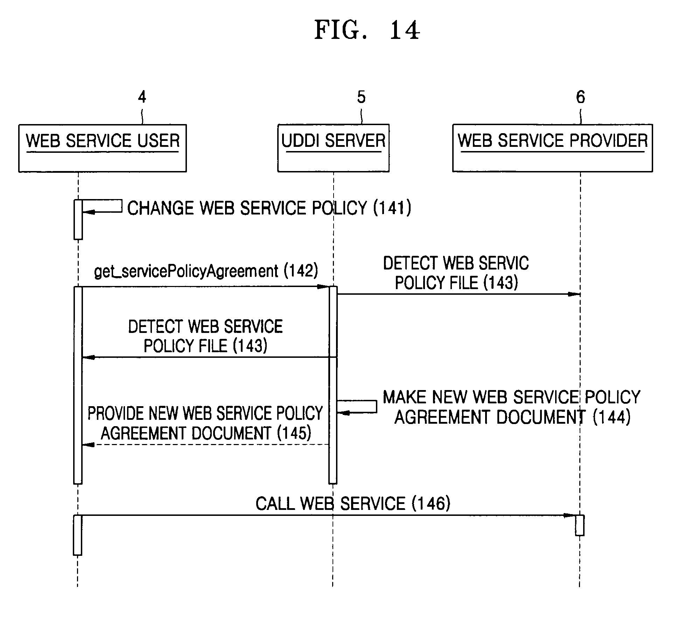

FIG. 14 is a flowchart illustrating a method of making a web service policy agreement according to another exemplary embodiment of the present invention;

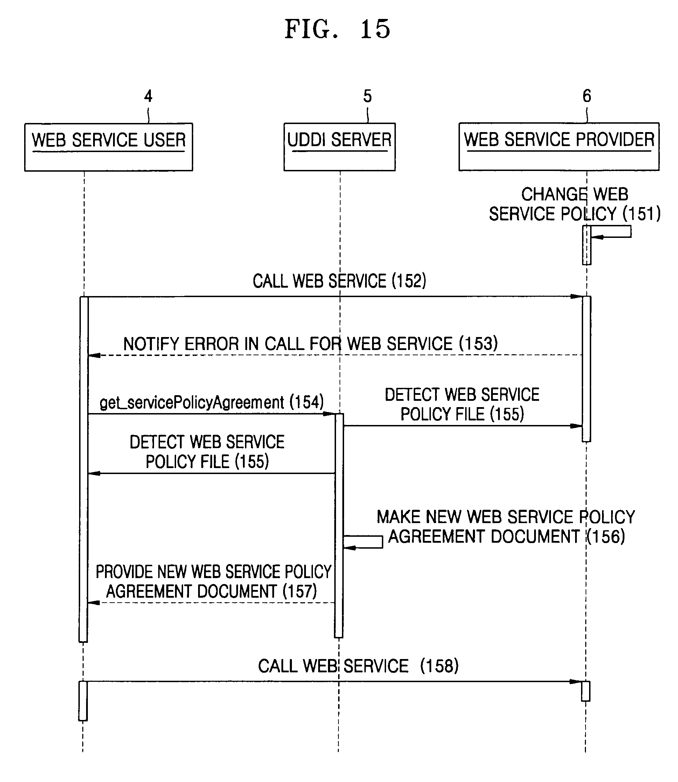

FIG. 15 is a flowchart illustrating a method of making a web service policy agreement according to another exemplary embodiment of the present invention;

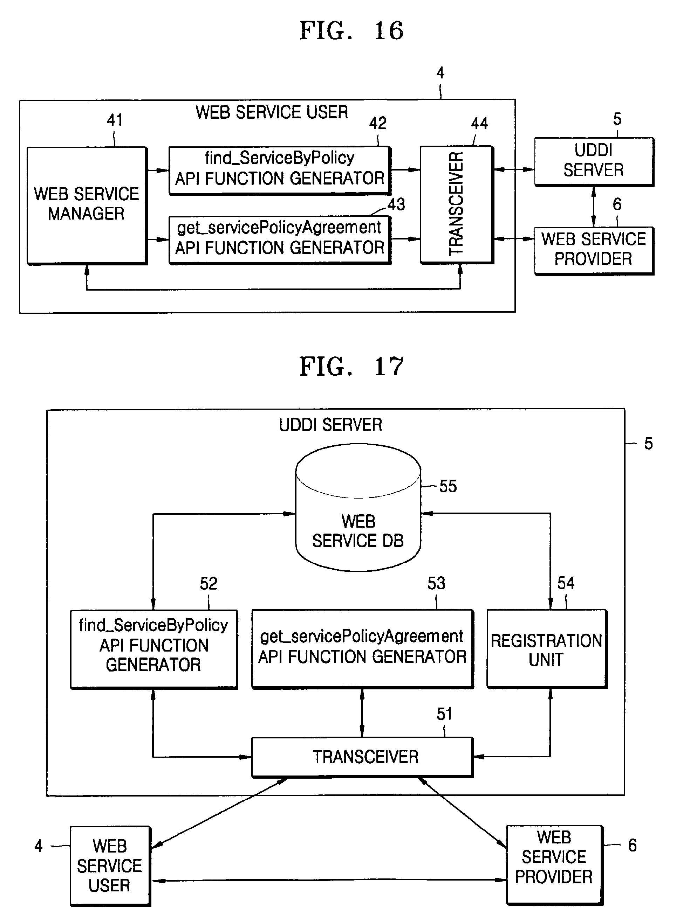

FIG. 16 is a block diagram illustrating the construction of a web service user according to an exemplary embodiment of the present invention; and

FIG. 17 is a block diagram illustrating the construction of a UDDI server according to an exemplary embodiment of the present invention.

Hereinafter, exemplary embodiments of the present invention will be described in detail with reference the accompanying drawings.

FIG. 10 is a table illustrating application program interface (API) functions according to an exemplary embodiment of the present invention. FIG. 10 illustrates a find_serviceByPolicy API function and a get_servicePolicyAgreement API function as the API functions.

The find_serviceByPolicy API function is an API function that requests that a web service be discovered from among a plurality of web services belonging to a service category to be called by a web service user, based on a web service policy of the web service user.

The find_serviceByPolicy API function has parameters such as a link to the web service policy of the web service user, CategoryBag, and tModelBag. The link to the web service policy of the web service user denotes the address, e.g., a universal resource locator (URL), of a place in which a file of the web service policy is stored. CategoryBag denotes a list of business categories that describe aspects of a specific business of a business entity. The business categories include an industrial category, a product category, a local category, etc. tModelBag denotes a list of tModel keys specifying tModels. A web service category can be specified using the CategoryBag and tModelBag parameters.

A UDDI server can detect a file of the web service policy of the web service user using the link to the web service policy, detect files of web service policies of web service providers that provide web services belonging to the web service category specifies by the CategoryBag and tModelBag parameters, using the CategoryBag and tModelBag parameters, and make a list of web services to be called by the web service user by comparing a web service policy file of the web service user with the web service policy files of the web service providers. The list of the web services to be called by the web service user are used as return values of the find_serviceByPolicy API function. The web service list is comprised of web service keys and business keys.

The get_servicePolicyAgreement API function is an API function that requests the UDDI server to which a plurality of web services are registered make an agreement document of web service policies of one of the web services.

The get_servicePolicyAgreement API function has parameters such as a web service key, and a link to the web service policy of the web service user. The UDDI server can detect a file of the web service policy of the web service user using the link to the web service policy of the web service user; detect files of web service providers that provide a specific web service defined by the web service key, referring to the web service key, and make a web service policy agreement document by comparing the web service policy file of the web service user with the web service policy files of the web service providers. The service policy agreement document is used as a return value of the get_servicePolicyAgreement API function.

FIG. 11 is a view illustrating a web service system according to an exemplary embodiment of the present invention. Referring to FIG. 11, the web service system includes a web service user 4, a UDDI server 5, and a web service provider 6, and makes an agreement between web service policies using the API functions illustrated in FIG. 10, as follows.

First, the web service provider 6 registers information regarding its web service to the UDDI server 5. The information contains a link to a web service policy of the web service provider 5, that is, the address, e.g., a URL, of a place in which a file of the web service policy is stored. Then, the web service user 4 calls the API functions of FIG. 10 to acquire a web service list or a web service policy argument made by the UDDI server 2 shown in FIG. 5. Next, the web service user 1 of FIG. 5 calls a web service using the web service policy agreement document.

Since the UDDI server 5 is a high-performance system unlike the web service user 4, it has a plenty of computing resources and disc resources, and information regarding the web service from the web service provider 5. Compared to the conventional art, the present exemplary embodiment uses API functions that allow the UDDI server 5 to perform a method of making a web service policy agreement so as to solve the conventional art problems.

Methods of making a web service policy agreement for various cases will now be described in greater detail with reference to FIGS. 12 through 15.

FIG. 12 is a flowchart illustrating a method of making a web service policy agreement according to an exemplary embodiment of the present invention. The method of FIG. 12 includes the following operations, and is performed to allow a web service user 4 to obtain a web service policy agreement document and a UDDI server 5 to provide the web service policy agreement document.

Referring to FIG. 12, the web service user 4 remotely calls a get_servicePolicyAgreement API function related to a web service from the UDDI server 5, and the UDDI server 5 remotely receives the call for the get_servicePolicyAgreement API function from the web service user 4 (121).

Next, the UDDI server 5 searches for a file of a web service policy of the web service user 4 and a file of a web service policy of a web service provider 6, in response to the call for the get_servicePolicyAgreement API function made in operation 121 (122).

Next, the UDDI server 5 compares the web service policy file of the web service user 4 with the web service policy file of the web service provider 6 which are searched in operation 122, and makes a web service policy agreement document based on the comparison result (123). However, when the elements of the web service policy file of the web service user 4 are different from those of the web service policy file of the web service provider 6, there is a possibility that a web service policy agreement document cannot be made.

Next, the UDDI server 5 provides the web service user 4 with the web service policy agreement document, which is made in operation 123, as a return value of the call for the get_servicePolicyAgreement API function made in operation 121, and the web service user 4 obtains the web service policy agreement document (124).

Next, the web service user 4 calls a web service from the web service provider 6, using the web service policy agreement document obtained in operation 124 (125).

According to the conventional method of FIG. 6, the web service provider must call a remote function three times and call a local function twice, whereas the method of FIG. 12 requires calling a remote function only once.

FIG. 13 is a flowchart illustrating a method of making a web service policy agreement according to an exemplary embodiment of the present invention. The method of FIG. 13 is performed to allow a web service user 4 to obtain a web service policy agreement document and a UDDI server 5 to provide the web service policy agreement document, and includes the following operations.

First, the web service user 4 remotely calls a find_serviceByPolicy API function relating to a service category from a UDDI server 5, and the UDDI server 5 remotely receives the call for the find_serviceByPolicy API function from the web service user 4 (131).

Next, the UDDI server 5 searches for a list of web services belonging to the service category in response to the call for the find_serviceByPolicy API function made in operation 131 (132).

Next, the UDDI server 5 searches for a file of a web service policy of the web service user 4, and searches for a file of a web service policy of a first web service 61 that provides a first web service from the web service list searched in operation 132 (133).

Next, the UDDI server 5 compares the web service policy file of the web service user 4 detected in operation 132 with the web service policy file of the first web service 61, and determines whether a web service from the first web service 61 can be called by the web service user 4, based on the comparison result (134).

Next, the UDDI server 5 performs operations 133 and 134 on each of the other web services (second through n^{th} web services) listed in the web service list detected in operation 132, and makes a list of web services to be called by the web service user 4 according to the result of operation 132 and the result of repeatedly performing operations 133 and 134 (135). However, when elements of the web service policy file of the web service user 4 are different from those of the web service policy file of the first web service provider 61, there is a possibility that the web service from the first web service provider 61 cannot be called by the web service user 4.

Next, the UDDI server 5 provides the web service user 4 with the web service list, which is made in operation 135, as a return value of the call for the find_serviceByPolicy API function made in operation 131, and the web service user 4 obtains the web service list (136).

Next, the web service user 4 selects a web service from the web service list obtained in operation 136 (137). Hereinafter, it is assumed that the web service user 4 selects a second web service 62.

Next, the web service user 4 remotely calls a get_servicePolicyAgreement API function related to the second web service selected in operation 137 from the UDDI server 5, and the UDDI server 5 remotely receives the call for the get_servicePolicyAgreement API function from the web service user 4 (138).

Next, the UDDI server 5 detects a file of a web service policy of the web service user 4 and a file of a web service policy of a second web service provider 62, in response to the call for the get_servicePolicyAgreement API function made in operation 138 (139).

Next, the UDDI server 5 compares the web service policy file of the web service user 4 and the web service policy file of the second web service provider 62 which are detected in operation 139, and makes a web service policy agreement document according to the comparison result (1310).

Next, the UDDI server 5 provides the web service user 4 with the web service policy agreement document, which is made in operation 1310, as a return value of the call for the get_servicePolicyAgreement API function made in operation 138, and the web service user 4 receives the web service policy agreement document (1311).

Next, the web service user 4 calls a web service from the second web service provider 62 using the web service policy agreement document obtained in operation 1311 (1312).

According to the conventional method of FIG. 7, a web service provider must a call remote function (3×n+1) times and a local function (n+2) times, whereas the method of FIG. 13 requires calling a remote function only twice.

FIG. 14 is a flowchart illustrating a method of making a web service policy agreement according to an exemplary embodiment of the present invention. The method of FIG. 14 includes the following operations, and is performed to allow a web service user 4 to obtain a web service policy agreement document and a UDDI server 5 to provide the web service policy agreement document.

First, the web service user 4 changes its web service policy (141).

Next, the web service user 4 remotely calls a get_servicePolicyAgreement API function that requests an agreement document of the web server policy changed in operation 141 be made, from a UDDI server 5, and the UDDI server 5 remotely receives the call for the get_servicePolicyAgreement API function from the web service user 4 (142).

Next, the UDDI server 5 detects a file of a web service policy of the web service user 4 and a file of a web service policy of a web service provider 6, in response to the call for the get_servicePolicyAgreement API function made in operation 142 (143).

Next, the UDDI server 5 compares the web service policy file of the web service user 4 and the web service policy file of the web service provider 6 which are detected in operation 143, and makes a new web service policy agreement document based on the comparison result (144). However, when elements of the web service policy file of the web service user 4 are different from those of the web service policy file of the web service provider 6, there is a possibility that a web service policy agreement document cannot be made.

Next, the UDDI server 5 provides the web service user 4 with the new web service policy agreement document, which is made in operation 144, as a return value of the call for the get_servicePolicyAgreement API function made in operation 142, and the web service user 4 receives the new web service policy agreement (145).

Next, the web service user 4 calls a web service from the web service provider 6, using the web service policy agreement document obtained in operation 145 (146).

According to the conventional method of FIG. 8, the web service provider 3 must call a remote function three times and call a local function twice, whereas the method of FIG. 14 requires calling a remote function only once.

FIG. 15 is a flowchart illustrating a method of making a web service policy agreement according to an exemplary embodiment of the present invention. The method of FIG. 15 includes the following operations, and is performed to allow a web service user 4 to obtain a web service policy agreement document and a UDDI server 5 to provide the web service policy agreement document.

First, a web service provider 6 changes its web service policy (151).

Next, the web service user 4 calls a web service to the web service provider 6 using the existing web service policy agreement document (152).

Next, the web service provider 6 receives the call for the web service, and informs the web service user 4 of an error in the call for the web service, caused by the difference between web service policies of the web service user 4 and the web service provider 6 (153).

Next, when being informed of the error in the call for the web service in operation 153 from the web service provider 6, the web service user 4 remotely calls a get_servicePolicyAgreement API function that requests that a new web service policy agreement document be made, from a UDDI server 5, and the UDDI server 5 remotely receives the call for the get_servicePolicyAgreement API function from the web service user 4 (154).

Next, the UDDI server 5 searches for a file of a web service policy of the web service user 4, and a file of a web service policy of the web service provider 6, in response to the call for the get_servicePolicyAgreement API function made in operation 154 (155).

Next, the UDDI server 5 compares the web service policy file of the web service user 4 and the web service policy file of the web service provider 6 which are detected in operation 155, and makes a new web service policy agreement document based on the comparison result (156). However, when elements of the web service policy file of the web service user 4 are different from those of the web service policy file of the web service provider 6, there is a possibility that a web service policy agreement document cannot be made.

Next, the UDDI server 5 provides the web service user 4 with the new web service policy agreement document, which is made in operation 156, as a return value of the call for the get_servicePolicyAgreement API function made in operation 154, and the web service user 4 receives the new web service policy agreement document (157).

Next, the UDDI server 5 calls a web service from the web service user 4 using the web service policy agreement document obtained in operation 156 (158).

According to the conventional method of FIG. 9, the web service provider 3 must call a remote function three times and a local function twice, whereas the method of FIG. 15 requires calling a remote function only once.

FIG. 16 is a block diagram illustrating a web service user 4 according to an exemplary embodiment of the present invention. Referring to FIG. 16, the web service user 4 includes a web service manager 41, a find_serviceByPolicy API function generator 42, a get_servicePolicyAgreement API function generator 43, and a transceiver 44. In the present exemplary embodiment, the web service user 4 is designed to obtain an agreement document of a web service policy used in the web service user 4 in order to perform the methods of FIGS. 12 through 15.

The web service manager 41 manages a web service from the web service user 4. More specifically, when there is a need for detection of a web service that can be called by the web service user 4, the web service manger 41 requests that the find_serviceByPolicy API function generator 42 generate a find_serviceByPolicy API function. Also, when a policy agreement document of a web service is required, the web service manager 41 requests the get_servicePolicyAgreement API function generator 43 to generate a get_servicePolicyAgreement API function.

Also, the web service manager 41 receives a web service list, which corresponds to a return value of the find_serviceByPolicy API function, from the transceiver 44, and selects a web service from the web service list. Also, the web service manager 41 receives a web service policy agreement document, which corresponds to a return value of the get_servicePolicyAgreement API function, from the transceiver 44, and calls a web service from the web service provider 6 using the web service policy agreement document.

Also, when a web service policy of the web service user 4 is required to be changed, the web service manager 41 changes the web service policy of the web service user 4. Also, when the transceiver 44 informs the web service manager 41 of an error in a call for a web service, the web service manager 41 requests the get_servicePolicyAgreement API function generator 43 to generate a get_servicePolicyAgreement API function.

As per an instruction from the web service manager 41, the find_serviceByPolicy API function generator 42 generates a find_serviceByPolicy API function that requests that a web service, which can be called by the web service user 4, be detected from among a plurality of web services belonging to a service category according to the web service policy of the web service user 4.

As per an instruction from the web service manager 41, the get_servicePolicyAgreement API function generator 43 generates a get_servicePolicyAgreement API function that requests that a UDDI server 5 to which a plurality of web services are registered make a policy agreement document of a web service selected from among the web services by the web service user 4, for example.

The transceiver 44 remotely calls the find_serviceByPolicy API function generated by the find_serviceByPolicy API function generator 42, obtains a list of web services, as a return value of the call for the find_serviceByPolicy API function, which can be called by the web service user 4, and transmits the web service list to the web service manager 41. The transceiver 44 remotely calls the get_servicePolicyAgreement API function generated by the get_servicePolicyAgreement API function generator 43, acquires a web service policy agreement document as a return value of the call for the get_servicePolicyAgreement API function, and provides the web service manager 41 with the web service policy agreement document. When the web service provider 6 informs the transceiver 44 of an error in a call for a web service, the transceiver 44 transmits this information to the web service manager 41.

FIG. 17 is a block diagram illustrating the construction of a UDDI server 5 according to an exemplary embodiment of the present invention. Referring to FIG. 17, the UDDI server 5 includes a transceiver 51, a find_serviceByPolicy API function generator 52, a get_servicePolicyAgreement API function generator 53, a registration unit 54, and a web service database 55. In the present exemplary embodiment, the web service provider 5 is designed to obtain an agreement document of a web service policy used in the web service provider 5 so as to perform the methods of FIGS. 12 through 15.

When the transceiver 51 remotely receives, from a web service user 4, a call for a find_serviceByPolicy API function that requests a web service, which can be called by the web service user 4, be detected from among web services registered to the web service database 55 according to a web service policy of the web service user 4, the transceiver 51 inputs the received call to the find_serviceByPolicy API function generator 52. Also, when the transceiver 51 receives a get_servicePolicyAgreement API function that requests a UDDI server 5 to make an agreement document of a web service policy of one of the web services registered to the web service database 55, the transceiver 51 transmits the call to the get_servicePolicyAgreement API function generator 53.

The transceiver 51 also provides a list of web services that can be called by the web service user 4 to the web service user 4. The list is provided as a return value of the call for the find_serviceByPolicy API function, the list being generated by the find_serviceByPolicy API function generator 52. Furthermore, the transceiver 51 provides the web service user 4 with a web service policy agreement document as a return value to the call for the get_servicePolicyAgreement API function, the web service policy agreement being generated by the get_servicePolicyAgreement API function generator 53.

The find_serviceByPolicy API function generator 52 performs a series of operations corresponding to the find_serviceByPolicy API function and transmits the operation results to the transceiver 51, in response to the call for find_serviceByPolicy API function from the transceiver 51. Here, the series of the operations denote operations 132 through 136 of FIG. 13.

The get_servicePolicyAgreement API function generator 53 performs a series of operations corresponding to the get_servicePolicyAgreement API function and transmits the operation results to the transceiver 51, in response to the get_servicePolicyAgreement API function received from the transceiver 51. Here, the series of the operations denote operations 122 and 123 of FIG. 12, operations 139 and 1310 of FIG. 13, operations 143 and 144 of FIG. 14, or operations 155 and 156 of FIG. 15.

The registration unit 54 registers the web service from the web service provider 6 by collecting information thereof all over the world and storing the collected information in the web service database 55.

The above exemplary embodiments of the present invention may be embodied as a program that can be executed in a computer, and realized in a general digital computer that can run the program using a computer readable medium. Also, the data used in the above exemplary embodiments may be recorded on a computer readable medium using various types of apparatuses.

The computer readable medium may be any recording medium capable of storing data, e.g., a magnetic storage medium (a ROM, a floppy disk, a hard disk, etc.), an optical data storage device (a CD-ROM, a DVD, etc.), and a carrier wave that transmits data via the Internet, for example.

As described above, preferred embodiments of the present invention have proposed API functions that allow a UDDI server to perform a method of making a web service policy agreement, thus obtaining the following advantages.

First, conventionally, when a web service is to be received or the existing web service policy is changed, a remote function must be called three times and a local function must be called twice. However, preferred embodiments of the present invention require a remote function to be called only once, thereby minimizing the loading on a web service user.

Second, conventionally, whenever a web service user requires a web service policy agreement document, the web service user has to download and store a file of a web service policy of a web service provider. However, according to preferred embodiments of the present invention, since a UDDI server performs a process of making a web service policy agreement, the web service user need not download and store the web service policy file of the web service provider, thereby preventing waste of network resources and disk resources of the web service user.

Third, conventionally, a process of making a web service policy agreement is performed by internal elements of the web service user, but according to preferred embodiments of the present invention, a process of making a web service policy agreement is performed only by the UDDI server. Accordingly, it is possible to establish a standard for a process of making a web service policy agreement, thereby reducing development costs for conventional, various methods thereof.

While this invention has been particularly shown and described with reference to exemplary embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of obtaining an agreement document of web service policies between a web service user and a web service provider, the method comprising:
calling a first function which requests a server to make an agreement document of a web service policy regarding a web service of a plurality of web services registered to the server; and
obtaining the agreement document as a return value of the call for the first function.

2. The method of claim 1, wherein the first function is an application program interface (API) function of the server, and
in the calling the first function, the API function is remotely called to the server.

3. The method of claim 1 or claim 2, further comprising:
calling a second function which requests which a web service, which is to be called by the web service user, be discovered from among the web services according to a web service policy of the web service user;
obtaining a list of web services to be called by the web service user as a return value of the call for the second function; and
selecting a web service from the obtained list of the web services,
wherein in the calling the first function, the first function is called to request that an agreement document of a web service policy of the selected web service be made.

4. The method of any preceding claim, further comprising changing the web service policy of the web service user,
wherein in the calling the first function, the first function is called to request that an agreement document of the changed web service policy be made.

5. The method of any preceding claim, further comprising:
calling one of the plurality of web services; and
receiving a notification which informs of an error in the call for the web service,
wherein , if the notification is received, the calling the first function occurs.

6. An apparatus for obtaining a web service policy agreement document between a web service user (14) and a web service provider, comprising:
a first function generator (42) which generates a first function which requests a server to make an agreement document of a web service policy regarding a web service of a plurality of web services registered to the server; and
a receiver (44) which obtains the agreement document as a return value of the call for the first function generated by the first function generator.

7. The apparatus of claim 6, wherein the first function is an application program interface (API) function of the server, and the apparatus further comprises a transmitter which remotely calls the API function from the server, the API function being generated by the first function generator.

8. The apparatus of claim 6 or claim 7, further comprising a second function generator (43) which generates a second function, which requests a web service, which is to be called by the web service user, to be discovered from among the web services according to a web service policy of the web service user,
wherein the receiver obtains a list of web services, which are to be called by the web service user, as a return value of the second function generated by the second function generator, and
the first function generator (42) calls a third function which requests an agreement document of a web service policy be made of a web service selected from the obtained list of the web services by the web service user.

9. A computer readable recording medium which stores a program for executing a method of obtaining a web service policy agreement document between a web service user and a web service provider in a computer, the method comprising:
calling a first function which requests a server to make an agreement document of a web service policy regarding a web service of a plurality of web services registered to the server; and
obtaining the agreement document as a return value of the call for the first function.

10. A method of providing a web service policy agreement document between a web service user and a web service provider, comprising:
a server receiving a call for a first function requesting which an agreement document of a web service policy regarding one of a plurality of web services registered to the server be made;
performing a series of operations corresponding to the first function in response to the call for the first function; and
providing the web service user with an agreement document as a return value of the call for the first function.

11. The method of claim 10, wherein the first function is an application program interface (API) function of the server, and
wherein in the server receiving a call, the server remotely receives the call for the API function from the web service user.

12. The method of claim 10 or claim 11, wherein the performing a series of operations comprises:
detecting a file of a web service policy of the web service user and a file of a web service policy of the web service provider;
comparing the detected service policy files; and
making the agreement document based on the comparison result.

13. The method of any one of claims 10-12, further comprising:
receiving a call for a second function which requests a web service, which is to be called by the web service user, be discovered from among the web services according to the web service policy of the web service user;
performing a series of operations corresponding to the second function in response to the call for the second function, which creates a list of web services; and
providing the list of web services as a return value of the call for the second function,,
wherein in the server receiving a call, the call for the first function requesting which an agreement document of a web service policy regarding a web service selected from the list of the web services by the web service user be made, is received.

14. The method of claim 13, wherein the performing a series of operations comprises:
detecting a file of a web service policy of the web service user and a file of a web service policy regarding one of the web service;
comparing the detected web service policy files;
determining whether the web service is to be called by the web service user based on the comparison result; and
making a list of web services to be called by the web service user based on the determination result.

15. An apparatus for providing a web service policy agreement document between a web service user and a web service provider, comprising:
a first function processor (42) which performs a series of operations corresponding to a first function in response to a call for the first function,; and
a transmitter which provides an agreement document, which is obtained as the result of the operations performed by the first function processor, as a return value of the call for the first function.

16. The apparatus of claim 15, wherein the first function is an application program interface (API) function of the server,
the apparatus further comprising a receiver which remotely receives a call for the API function from the web service user,
wherein the first function processor {42) performs a series of operations corresponding to the API function in response to the call for the API function received by the receiver.

17. The apparatus of claim 15 or claim 16, further comprising:
a second function processor (43) which performs a series of operations corresponding to a second function in response to a call for the second function,
wherein the transmitter provides a list of web services to be called by the web service user, the list of the web services being obtained as the result of the operations performed by the second function processor, and
the first function processor performs a series of operations corresponding to a third function which requests an agreement document of a web service policy be made regarding a web service selected from the list of the web services by the web service user, the list of the web services being provided from the transmitter.

18. A computer readable recording medium which stores a program for executing a method of providing a web service policy agreement document between a web service user and a web service provider in a computer, the method comprising:
a server receiving a call for a first function requesting which an agreement document of a web service policy regarding one of a plurality of web services registered to the server be made;
performing a series of operations corresponding to the first function in response to the call for the first function, which results in an agreement document; and
providing the web service user with the agreement document as a return value of the call for the first function.
